# EUROPEAN PATENT APPLICATION

(11) **EP 4 428 746 A1**
(43) Date of publication of application: **11.09.2024**
(21) Application number: 24157610.7
(22) Date of filing: 14.02.2024
(51) Int. Cl.: G06K 7/10

(54) **OPTICAL ASSEMBLY, IMAGING READER, AND METHOD FOR DUAL-LENS ILLUMINATION**

(30) Priority: 03.03.2023 US 202318177903
(71) Applicant: Hand Held Products, Inc., Charlotte, NC 28202 (US)
(72) Inventor: GIORDANO, Patrick, Charlotte, 28202 (US); GOOD, Timothy, Charlotte, 28202 (US); RUEBLINGER, Gregory, Charlotte, 28202 (US); VAN HORN, Erik, Charlotte, 28202 (US)
(74) Representative: Haseltine Lake Kempner LLP

(57) **Abstract**

Optical assembly, imaging reader, and method for dual-lens illumination are provided. For example, an example optical assembly may include first and second light sources, first and second collection lenses positioned and shaped to collect light emitted by the first and second light sources and transmit the collected light with reduced divergence, first and second pattern-shaping apertures positioned to allow at least a portion of the light transmitted by the first and second collection lens to pass therethrough, and first and second projection lens positioned to receive the light transmitted by the first and second collection lenses and passed through the first and second pattern-shaping apertures. The projection lenses are shaped to project the received light into the field of view of an imaging system with a higher intensity at a lateral side edge of the light projected and a lower intensity at a medial side edge of the light projected.

## Description

### FIELD OF THE INVENTION

Embodiments of the present disclosure generally relate to illumination assemblies for imaging apparatuses, such as, but not limited to, barcode and/or other symbology scanners.

### BACKGROUND

A barcode reader (also referred to as a barcode scanner) is an electronic device that can capture information stored in barcodes. Applicant has identified many technical challenges and difficulties associated with barcode readers/scanners, in particular illumination assemblies related to barcode readers/scanners.

### BRIEF SUMMARY

Various embodiments described herein relate to optical assemblies, imaging readers, and methods for dual-lens illumination.

In accordance with various embodiments of the present disclosure, an optical assembly is provided. In some embodiments, the optical assembly comprises an imaging system comprising an imaging lens and a corresponding imaging sensor and having a field of view, a first light source, a first collection lens positioned and shaped to collect light emitted by the first light source and transmit the collected light with reduced divergence, a first pattern-shaping aperture positioned to allow at least a portion of the light transmitted by the first collection lens to pass therethrough, a first projection lens positioned to receive the light transmitted by the first collection lens and passed through the first pattern-shaping aperture, a second light source, a second collection lens positioned and shaped to collect light emitted by the second light source and transmit the collected light with reduced divergence, a second pattern-shaping aperture positioned to allow light transmitted by the second collection lens to pass therethrough, and a second projection lens positioned to receive the light transmitted by the second collection lens and passed through the second pattern-shaping aperture. In some embodiments, the first projection lens is shaped to project the received light into the field of view of the imaging system with a higher intensity at a lateral side edge of the light projected by the first projection lens and a lower intensity at a medial side edge of the light projected by the first projection lens. In some embodiments, the second projection lens is shaped to project the received light into the field of view of the imaging system with a higher intensity at a lateral side edge of the light projected by the second projection lens and a lower intensity at a medial side edge of the light projected by the second projection lens. In some embodiments, the first light source and the second light source are positioned substantially symmetrically on opposite sides of the imaging lens. In some embodiments, the first collection lens and the second collection lens are positioned substantially symmetrically on opposite sides of the imaging lens. In some embodiments, the first pattern-shaping aperture and the second pattern-shaping aperture are positioned substantially symmetrically on opposite sides of the imaging lens. In some embodiments, the first projection lens and the second projection lens are positioned substantially symmetrically on opposite sides of the imaging lens. In some embodiments, the light projected by the first projection lens and the light projected by the second projection lens are projected to a same location such that the light projected by the first projection lens and the light projected by the second projection lens merges.

In some embodiments, the first pattern-shaping aperture defines a shape of the light projected by the first projection lens and the second pattern-shaping aperture defines a shape of the light projected by the second projection lens.

In some embodiments, the light projected by the first projection lens and the light projected by the second projection lens are entirely within the field of view of the imaging system.

In some embodiments, the first collection lens is positioned and shaped to transmit substantially no light along a medial side edge of the first pattern-shaping aperture and the second collection lens is positioned and shaped to transmit substantially no light along a medial side edge of the second pattern-shaping aperture.

In some embodiments, the first collection lens and the second collection lens are each substantially radially symmetric.

In some embodiments, the first projection lens and the second projection lens are substantially asymmetric.

In some embodiments, the first projection lens and the second projection lens are at least partially wedge-shaped.

In accordance with various embodiments of the present disclosure, an imaging reader is provided. In some embodiments, the imaging reader comprises a housing and an optical assembly mounted in the housing. In some embodiments, the optical assembly comprises an imaging system comprising an imaging lens and a corresponding imaging sensor and having a field of view, a first light source, a first collection lens positioned and shaped to collect light emitted by the first light source and transmit the collected light with reduced divergence, a first pattern-shaping aperture positioned to allow at least a portion of the light transmitted by the first collection lens to pass therethrough, a first projection lens positioned to receive the light transmitted by the first collection lens and passed through the first pattern-shaping aperture, a second light source, a second collection lens positioned and shaped to collect light emitted by the second light source and transmit the collected light with reduced divergence, a second pattern-shaping aperture positioned to allow light transmitted by the second collection lens to pass therethrough, and a second projection lens positioned to receive the light transmitted by the second collection lens and passed through the second pattern-shaping aperture. In some embodiments, the first projection lens is shaped to project the received light into the field of view of the imaging system with a higher intensity at a lateral side edge of the light projected by the first projection lens and a lower intensity at a medial side edge of the light projected by the first projection lens. In some embodiments, the second projection lens is shaped to project the received light into the field of view of the imaging system with a higher intensity at a lateral side edge of the light projected by the second projection lens and a lower intensity at a medial side edge of the light projected by the second projection lens. In some embodiments, the first light source and the second light source are positioned substantially symmetrically on opposite sides of the imaging lens. In some embodiments, the first collection lens and the second collection lens are positioned substantially symmetrically on opposite sides of the imaging lens. In some embodiments, the first pattern-shaping aperture and the second pattern-shaping aperture are positioned substantially symmetrically on opposite sides of the imaging lens. In some embodiments, the first projection lens and the second projection lens are positioned substantially symmetrically on opposite sides of the imaging lens. In some embodiments, the light projected by the first projection lens and the light projected by the second projection lens are projected to a same location such that the light projected by the first projection lens and the light projected by the second projection lens merges.

In accordance with various embodiments of the present disclosure, a method of projecting light is provided. In some embodiments, the method comprises emitting light by a first light source, collecting, by a first collection lens, light emitted by the first light source, transmitting, by the first collection lens, the collected light with reduced divergence, allowing, by a first pattern-shaping aperture, at least a portion of the light transmitted by the first collection lens to pass therethrough, receiving, by a first projection lens, the light transmitted by the first collection lens and passed through the first pattern-shaping aperture, projecting, by the first projection lens, the received light into a field of view of an imaging system with a higher intensity at a lateral side edge of the light projected by the first projection lens and a lower intensity at a medial side edge of the light projected by the first projection lens, emitting light by a second light source, collecting, by a second collection lens, light emitted by the second light source, transmitting, by the second collection lens, the collected light with reduced divergence, allowing, by a second pattern-shaping aperture, at least a portion of the light transmitted by the second collection lens to pass therethrough, receiving, by a second projection lens, the light transmitted by the second collection lens and passed through the second pattern-shaping aperture, and projecting, by the second projection lens, the received light into a field of view of an imaging system with a higher intensity at a lateral side edge of the light projected by the second projection lens and a lower intensity at a medial side edge of the light projected by the second projection lens. In some embodiments, the first light source and the second light source are positioned substantially symmetrically on opposite sides of an imaging lens of an imaging system. In some embodiments, the first collection lens and the second collection lens are positioned substantially symmetrically on opposite sides of the imaging lens. In some embodiments, the first pattern-shaping aperture and the second pattern-shaping aperture are positioned substantially symmetrically on opposite sides of the imaging lens. In some embodiments, the first projection lens and the second projection lens are positioned substantially symmetrically on opposite sides of the imaging lens. In some embodiments, the light projected by the first projection lens and the light projected by the second projection lens are projected to a same location such that the light projected by the first projection lens and the light projected by the second projection lens merges.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is an example system architecture diagram illustrating an example indicia data capturing and processing platform, in accordance with some embodiments of the present disclosure;
FIG. 2 illustrates an example block diagram of an example indicia data capturing device in accordance with example embodiments described herein;
FIG. 3A illustrates example internal components of an example indicia data capturing device, in accordance with some embodiments of the present disclosure;
FIG. 3B is an exploded view of the example internal components of the example indicia data capturing device of FIG. 3A;
FIG. 4 is a perspective view of a housing of an optical assembly of the example indicia data capturing device of FIG. 3A;
FIGS. 5A and 5B are front perspective views of, respectively example rear and front lens assemblies of the example indicia data capturing device of FIG. 3A;
FIGS. 6A and 6B are rear perspective views of, respectively, the example rear and front lens assemblies of FIGS. 5A and 5B;
FIG. 7 is a cross-sectional view of an example optical assembly of the example indicia data capturing device of FIG. 3A, along line A-A;
FIG. 8 is a front perspective view of an example dual illumination lens arrangement, in accordance with some embodiments of the present disclosure;
FIG. 9 is a side view of the example dual illumination lens arrangement of FIG. 8;
FIG. 10 is a top view of the example dual illumination lens arrangement of FIG. 8;
FIG. 11 illustrates an example light energy profile of a first lens of an example dual illumination lens arrangement, in accordance with some embodiments of the present disclosure;
FIGS. 12 and 13 illustrate example light distribution at different points of an example dual illumination lens arrangement, in accordance with some embodiments of the present disclosure;
FIGS. 14A-D illustrate example illumination patterns of an example dual illumination lens arrangement, in accordance with some embodiments of the present disclosure;
FIG. 15 illustrates an example illumination pattern of an example dual illumination lens arrangement, in accordance with some embodiments of the present disclosure;
FIG. 16 is an example flowchart illustrating an example method of dual-lens illumination in accordance with example embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

Unless specifically set forth herein, the terms "a," "an" and "the" are not limited to one element, but instead should be read as meaning "at least one." The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

In the present disclosure, the term "indicia" refers to one or more machine-readable/machine-decodable codes and/or symbols that represent data and information in a visual form that may include, but not limited to, patterns, lines, numbers, letters, and/or the like. Examples of indicia may include, but are not limited to, one-dimensional (1D) barcodes, two-dimensional (2D) barcodes, Quick Response (QR) code, information-based indicia, Aztec codes, data matrix, texts, and/or the like. In some embodiments, indicia may be affixed, printed, or otherwise attached to items and/or objects to provide information regarding the item or the object in a machine-readable/machine-decodable format.

In some embodiments, to capture data and/or information from indicia, an indicia data capturing device may be used. In the present disclosure, the term "indicia data capturing device" refers to a device that electro-optically reads and/or scans indicia. Examples of indicia data capturing devices may include, but are not limited to, barcode scanners, QR code scanners, imaging scanners, area-image scanners, imaging readers, and/or the like. In some embodiments, an example indicia data capturing device may be hand-held (for example, a scanner that can be moved by a user's hand over the indicia being scanned). In some embodiments, an example indicia data capturing device may be fixedly mounted (for example, a scanner that is mounted on top of a counter or a table).

As an example, a user may trigger an indicia data capturing device (e.g., by pulling a trigger of an indicia data capturing device, by pointing an indicia data capturing device in streaming mode at the indicia, etc.) to capture indicia imaging data of the indicia. In some embodiments, the indicia imaging data may comprise digital images of the indicia. In some embodiments, the indicia data capturing device may illuminate its field of view with a visible light source (such as, but not limited to, white light or laser light) through its illumination component during image capture, especially in low lighting conditions. In some embodiments, illuminating the indicia during imaging helps ensure that the captured indicia imaging data is suitable for processing.

In some embodiments, after the indicia data capturing device captures the indicia imaging data, the indicia data capturing device may process the indicia imaging data through a processor that is part of an indicia data capturing device. In some embodiments, the processor recognizes the indicia from the indicia imaging data and decodes the indicia according to a type of the indicia (such as, but not limited to, 1D barcodes, 2D barcodes, QR codes and/or the like) and/or a symbology format of the indicia (such as, but not limited to, Code 11, Code 128, and/or the like).

Indicia data capturing devices, such as barcode readers, that employ digital imaging typically also make use of an illumination system to provide light above and beyond the ambient light of the user environment. This allows exposure times to be shorter which reduces image blur caused by unintended motion, but there are other advantages that can be achieved if the illumination system is well designed. High uniformity of the illumination improves the quality of the image, improving the decoding performance, especially on direct part marked (DPM) codes. Many such codes are very small (high resolution) requiring them to be very close to the scanner, but illumination systems often have worse uniformity the closer you get to the reader.

There are many technical challenges and difficulties associated with such illumination systems. For example, many illumination systems project an illumination pattern that lacks a very crisp boundary. Illumination patterns that roll off slowly can make it difficult for the user to know where the active field of view (FOV) ends. Projecting an illuminated aperture shape into the FOV is a known way to solve this, but that typically comes at a significant efficiency cost and, if more than one light source is used, multiple unaligned images of the aperture can be visible.

In contrast, various embodiments of the present disclosure overcome these technical difficulties and challenges and provide various technical improvements to such illumination systems.

For example, various embodiments of the present disclosure provide two symmetric illumination subsystems, each of which would produce a non-uniform pattern on its own but when combined they produce a highly uniform pattern over a range of distances from the reader. Each illumination subsystem contributes one of the left/right edges of the sharp pattern, so that when combined there is a whole sharp perimeter without a double image effect. The uniformity that is achieved very close to the reader window is key to getting improved DPM code reading performance.

The symmetric arrangement of the subsystems means the illumination field and camera FOV do not become misaligned as the indicia is pushed very close to the reader, which is a common problem in conventional readers. The visual sharpness without double image presents a pleasing pattern.

The risk to efficiency that typically comes with introducing more optics into a system is dealt with in embodiments of the present disclosure by concentrating the illumination field to be just within the FOV of the camera. As such, light is not wasted outside the perimeter of the FOV and, as a result, the full area of the illumination field is useful for scanning. In typical conventional scanners with larger, less-defined patterns, it is possible to think an indicia is positioned well enough when part of the indicia may actually be falling outside the FOV. With embodiments of the present disclosure, the sharp pattern, in effect, performs an aiming function up close, where an independent aiming dot/pattern may be less reliable since it becomes offset from the FOV of the camera and blocked from view of the user by the device.

Some embodiments of the present disclosure are described herein as producing illumination light patterns which combine to produce a uniform illumination light pattern within the FOV of an example indicia data capturing device. In some alternative embodiments, one or more edges of the produced uniform illumination light pattern may match and/or exceed the FOV of an example indicia data capturing device.

Embodiments of the present disclosure use a symmetric arrangement of two projection-style illumination systems, each located to an opposing side of the imaging system. Each illumination subsystem has a pattern-shaping aperture located between a first and second lens. Three edges (top, bottom, and one side) of each aperture are projected out into the FOV. The fourth edge of the aperture is outside the active/lighted area (i.e., the aperture is underfilled with light at the fourth edge) of the optical subsystem and is thus not imaged. The left subsystem forms the left-edge image and the right subsystem forms the right-edge image. Both form top and bottom edges which overlap. Together all four edges of the pattern are formed in the FOV.

In some alternative embodiments of the invention, more than two symmetric illumination subsystems may be provided.

The first lens of each illumination subsystem serves three functions: 1) to collect as much light as possible from the light source; 2) to take the raw illumination profile of the source and tune the distribution across the aperture surface to a specific function with greater energy near the perimeter; and 3) to reduce the light divergence so that most or all the light that passes through the aperture will also pass through the second lens (thereby improving efficiency).

Next, the aperture forms the shape to be projected out into the FOV. As previously mentioned, each illumination subsystem only partially illuminates the shape. One side edge (i.e., the medial edge, which would be the left edge for the right side illumination subsystem or the right edge for the left side illumination subsystem) and the top and bottom edges will be projected by each illumination subsystem. Since each illumination subsystem is positioned to the left or right of the camera, the top and bottom edges of the pattern nearly overlap, while a single side edge (along with any desired pattern features on that edge) is projected by each of the illumination subsystems.

The second lens of each illumination subsystem serves two functions: 1) to project an image of the aperture out into the FOV; and 2) to taper the intensity of the illumination from high near the projected side edge (i.e., the lateral edge) to low on the un-projected side edge (i.e., the medial edge), with a nearly linear fall-off in between. The near-linear falloff has two benefits. First, the near-linear falloff allows the top and bottom edges projected from the two subsystems to blend together, and second, the falling illumination of the first subsystem overlapped with the rising illumination of the second subsystem creates the desired total flat, uniform illumination. As distance to the reader changes and the linear profiles shift relative to one another, the patterns projected by each illumination subsystem still combine to create a uniform intensity in between the two projected side edges.

As such, various embodiments of the present disclosure may provide technical advantages and improvements such as, but not limited to, providing a sharp, uniform illumination pattern that aligns with the imaging system's FOV to improve indicia scanning accuracy, details of which are described herein.

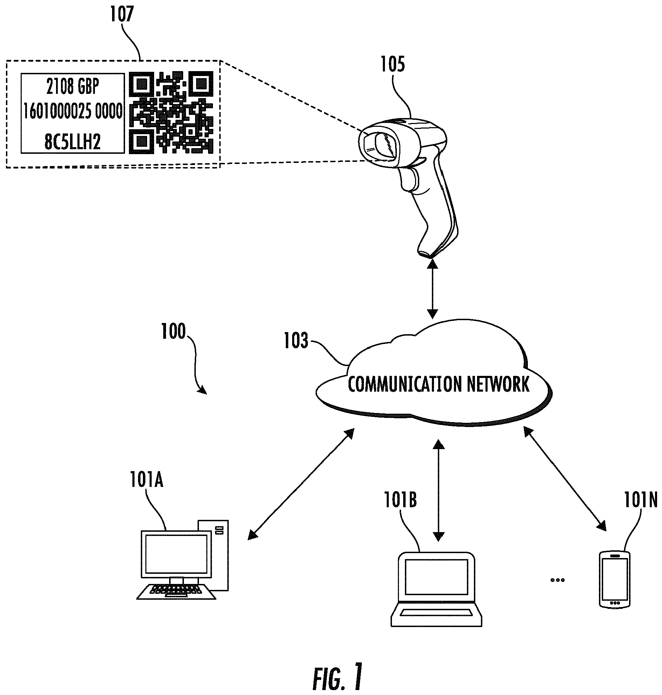

FIG. 1 illustrates an example indicia data capturing and processing platform 100 within which embodiments of the present disclosure may operate. In the example shown in FIG. 1, the indicia data capturing and processing platform 100 may comprise an indicia data capturing device 105 in electronic communication with one or more indicia data processing devices 101A, 101B, ... 101N via a communication network 103. In some embodiments, for example, the indicia data processing devices 101A, 101B, ... 101N may perform inventory tracking, order processing, etc.

For example, the indicia data capturing and processing platform 100 may capture and process indicia data associated with the indicia 107. While the indicia 107 in the example shown in FIG. 1 comprises texts, numbers, and a QR code, it is noted that the scope of the present discourse is not limited to the example shown in FIG. 1. As described above, an example indicia in accordance with embodiments of the present disclosure may include, but are not limited to, 1D barcodes, 2D barcodes, information-based indicia, Aztec codes, data matrix, and/or the like.

In some embodiments, a user may utilize the indicia data capturing device 105 of the indicia data capturing and processing platform 100 to capture indicia imaging data associated with the indicia 107. For example, a user may trigger the indicia data capturing device 105 by pointing the indicia data capturing device 105 at the indicia 107 and pulling the trigger of the indicia data capturing device 105. In some embodiments, the indicia data capturing device 105 may comprise an imaging component that comprises an imaging sensor. The imaging sensor may capture an image of the indicia 107 and may generate indicia imaging data corresponding to the indicia 107. In some embodiments, the indicia data capturing device 105 may comprise an illumination component that may illuminate the field of view of the imaging sensor so as to improve the imaging quality of the indicia imaging data.

In some embodiments, the indicia data capturing device 105 may communicate data and/or information (such as, but not limited to, indicia imaging data) to the one or more indicia data processing devices 101A, 101B, ..., 101N. In some embodiments, the communication network 103 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the communication network 103 may include an 802.11, 802.16, 802.20, and/or WiMax network. Further, the communication network 103 may include a public network (such as the Internet), a private network (such as an intranet), or combinations thereof, and may utilize a variety of networking protocols including, but not limited to, TCP/IP based networking protocols. For instance, the networking protocol may be customized to suit the needs of the indicia data capturing device 105. In some embodiments, the protocol is a custom protocol of JSON objects sent via a WebSocket channel. In some embodiments, the protocol is JSON over RPC, JSON over REST/HTTP, and the like.

While the description above provides some examples of the communication network that can facilitate data communications between the indicia data capturing device 105 and the indicia data processing devices 101A, 101B, ..., 101N, it is noted that the scope of the present disclosure is not limited to the description above. In some embodiments, the indicia data capturing device 105 may communicate with the indicia data processing devices 101A, 101B, .. ., 101N through other means. For example, the indicia data capturing device 105 may communicate with the indicia data processing devices 101A, 101B, ..., 101N through communication protocols such as, but not limited to, general packet radio service (GPRS), Universal Mobile Telecommunications System (UMTS), Code Division Multiple Access 1900 (CDMA1900), CDMA1900 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), Institute of Electrical and Electronics Engineers (IEEE) 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol. The indicia data capturing device 105 may use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

In some embodiments, the one or more indicia data processing devices 101A, 101B, . .., 101N may receive indicia imaging data from the indicia data capturing device 105 and may process the indicia imaging data to generate one or more decoded data strings that correspond to the indicia 107. Additionally, or alternatively, the indicia data capturing device 105 may generate one or more decoded data strings based on the indicia imaging data and may transmit the one or more decoded data strings to the one or more indicia data processing devices 101A, 101B, ..., 101N.

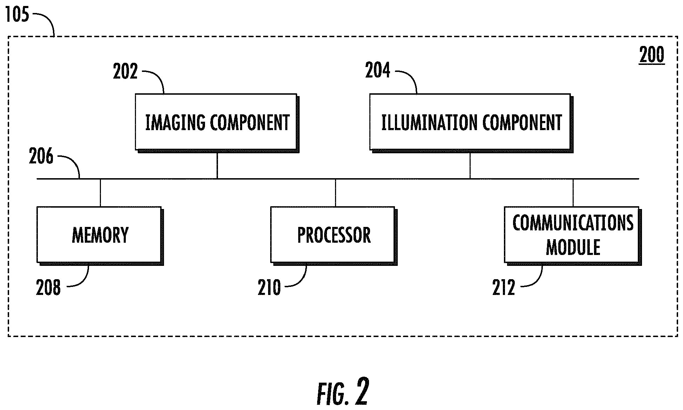

The indicia data capturing device 105 of FIG. 1 may include one or more components that are in electronic commutations with one another. For example, the indicia data capturing device 105 may comprise apparatus 200 shown in FIG. 2. The apparatus 200 may include a processor 210, a memory 208, a communications module 212, an imaging component 202, and an illumination component 204 that are in electronic communication with one another via a system bus 206. In some embodiments, the system bus 206 refers to a computer bus that connects these components so as to enable data transfer and communications between these components.

In some embodiments, the imaging component 202 may comprise one or more imaging sensors including, but are not limited to, a color or monochrome 1D or 2D Charge Coupled Device (CCD), Complementary Metal-Oxide-Semiconductor (CMOS), N-channel Metal-Oxide-Semiconductor (NMOS), P-channel Metal-Oxide-Semiconductor (PMOS), Charge Injection Device (CID) or Charge Modulation Device (CMD) solid state image sensor, and/or the like. In some embodiments, the imaging component 202 may define a field of view for capturing an image of indicia and generating indicia imaging data.

In some embodiments, the apparatus 200 may comprise an illumination component 204 that is configured to illuminate the field of view of the imaging component 202, so as to improve the quality of the captured indicia imaging data. In some embodiments, the illumination component 204 may include an illumination source and an illuminating optics assembly. Examples of illuminating optics assemblies may include, but are not limited to, one or more lenses, diffusers, wedges, reflectors or a combination of such elements, for directing light from illumination source in the direction of the field of view. For example, if the image of the indicia 107 shown in FIG. 1 is to be captured, the illuminating optics assembly may be configured to direct the light from the illumination source on the indicia 107. Some examples of the illumination source may include, but are not limited to, laser diodes (for example, violet laser diodes, visible laser diodes, edge-emitting laser diodes, surface-emitting laser diodes, and/or the like). Additionally, or alternatively, the illumination source may comprise one or more light-emitting diodes (LEDs). Additionally, or alternatively, the illumination source may comprise one or more other forms of natural and/or artificial sources of light.

In some embodiments, the illuminating optics assembly of the illumination component comprises a dual-lens assembly as described below.

In some embodiments, the imaging component 202 and/or the illumination component 204 may be controlled by the processor 210. For example, the processor 210 may transmit electronic instructions to the illumination component 204 via the system bus 206 to trigger the illumination component 204 to illuminate the field of view of the imaging component 202, may transmit electronic instructions to the imaging component 202 to trigger the imaging component 202 to capture indicia imaging data that include one or more images of the indicia, and may receive the indicia imaging data from the imaging component 202.

The processor 210 may be embodied in a number of different ways and may, for example, include one or more processing devices configured to perform independently. Additionally, or alternatively, the processor 210 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

For example, the processor 210 may be embodied as one or more complex programmable logic devices (CPLDs), microprocessors, multi-core processors, co-processing entities, application-specific instruction-set processors (ASIPs), and/or controllers. Further, the processor 210 may be embodied as one or more other processing devices or circuitry. The term circuitry may refer to an entirely hardware embodiment or a combination of hardware and computer program products. Thus, the processor 210 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processor 210 may be configured for a particular use or configured to execute instructions stored in volatile or non-volatile media or otherwise accessible to the processor 210. As such, whether configured by hardware or computer program products, or by a combination thereof, the processor 210 may be capable of performing steps or operations according to embodiments of the present disclosure when configured accordingly.

In an example embodiment, the processor 210 may be configured to execute instructions stored in the memory 208 or otherwise accessible to the processor. Alternatively, or additionally, the processor 210 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor 210 is embodied as an executor of software instructions, the instructions may specifically configure the processor to perform the algorithms and/or operations described herein when the instructions are executed.

In some embodiments, the memory 208 may be non-transitory and may include, for example, one or more volatile and/or non-volatile memories. In other words, for example, the memory 208 may be an electronic storage device (e.g., a computer readable storage medium). The memory 208 may be configured to store information, data, content, applications, instructions, or the like, for enabling the apparatus 200 to carry out various functions in accordance with example embodiments of the present disclosure. In this regard, the memory 208 may be preconfigured to include computer-coded instructions (e.g., computer program code), and/or dynamically be configured to store such computer-coded instructions for execution by the processor 210.

In an example embodiment, the apparatus 200 further includes a communications module 212 that may enable the apparatus 200 to transmit the indicia imaging data to other devices (such as, but not limited to, the indicia data processing devices 101A, 101B, ... , 101N as shown in FIG. 1) through a communication network. The communications module 212 may be any means such as a device or circuitry embodied in either hardware or a combination of hardware and software that is configured to receive and/or transmit data from/to a network and/or any other device, circuitry, or module in communication with the apparatus 200. In this regard, the communications module 212 may include, for example, a network interface for enabling communications with a wired or wireless communication network. For example, the communications module 212 may include one or more circuitries, network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

Some examples of the apparatus 200 may include, but are not limited to, an indicia scanner, a handheld scanner, a flatbed scanner, a camera, and/or any other device that is capable of capturing a plurality of images of the indicia and/or generating indicia imaging data of the indicia. Additionally, or alternatively, the apparatus 200 may be in other form(s) and /or may comprise other component(s).

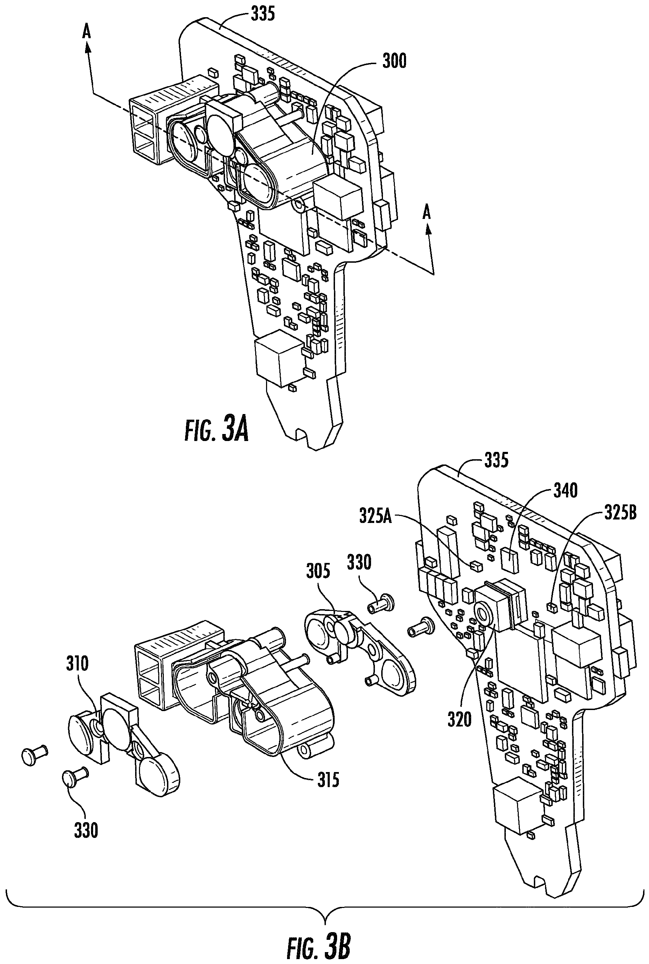

Referring now to FIGS. 3A and 3B, example internal components of an example indicia data capturing device are illustrated. In some embodiments, as illustrated, most or all of the internal components are mounted to a printed circuit board (PCB) 335For example, the PCB 335 may comprise non-conductive substrate materials with layers of copper circuitry that is buried internally or disposed on the external surface. In some embodiments, the copper circuitry may connect one or more electronic components of the example indicia data capturing device 105 to one or more other electronic components of the example indicia data capturing device 105. In some embodiments, components may be mounted to one side or to both sides of the PCB. Although not all are labeled in FIGS. 3A and 3B, some of the components mounted on the PCB may include the imaging component 202 (including a camera 320 and a corresponding imaging sensor), the illumination component 204 (including a right light source 325A, a left light source 325B, and an optical assembly 300), the memory 208, the processor 210, the communications module 212, and an aiming light source 340. As described above, the light sources 325A, 325B may comprise LEDs. In some embodiments, there is a one-to-one correspondence between the camera and the imaging sensor. For example, in some embodiments there is one camera and one corresponding imaging sensor. In another example, there are two cameras and two respectively corresponding imaging sensors.

In some embodiments, as described further below, the optical assembly 300 forms part of an illumination component and part of an aiming component of an example indicia data capturing device. In some embodiments, the optical assembly 300 is mounted to the PCB such that the camera 320 protrudes at least partly through the optical assembly 300 to ensure proper alignment between the optical assembly 300 and the camera 320 and therefore proper alignment between the illumination component and the camera 320 and between the aiming component and the camera 320.

In some embodiments, the optical assembly 300 comprises a housing 315, a rear lens assembly 305, and a front lens assembly 310. In some embodiments, the housing 315, the rear lens assembly 305, and the front lens assembly 310 are secured together with fasteners 330, although any suitable fastening mechanism or method may be used.

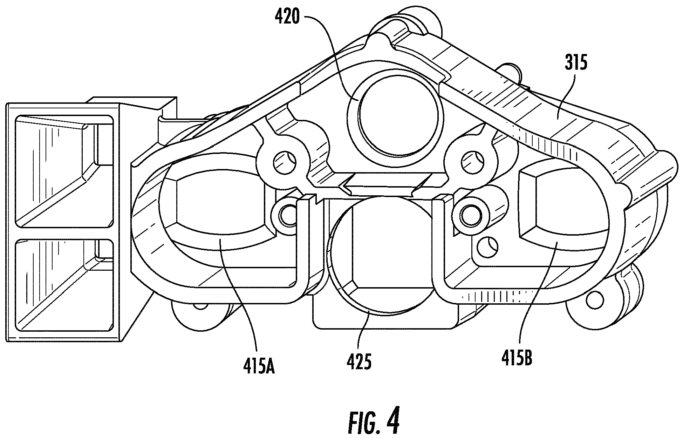

Referring now to FIG. 4, in which an example housing 315 of an example optical assembly is illustrated. In some embodiments, as illustrated in FIG. 4, the housing 315 defines a right pattern-shaping aperture 415A and a left pattern-shaping aperture 415B. In some embodiments, as illustrated in FIG. 4, the housing 315 also defines an aiming aperture 420 and a camera aperture 425.

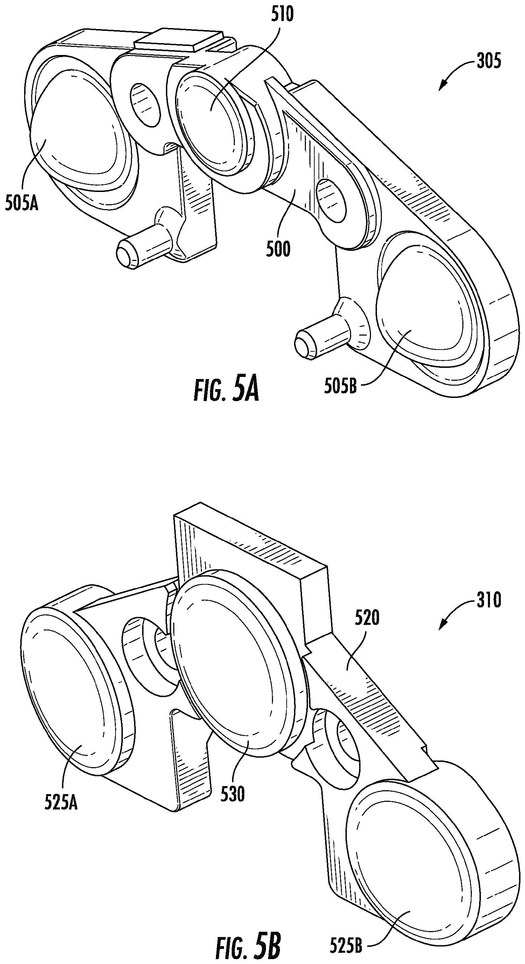

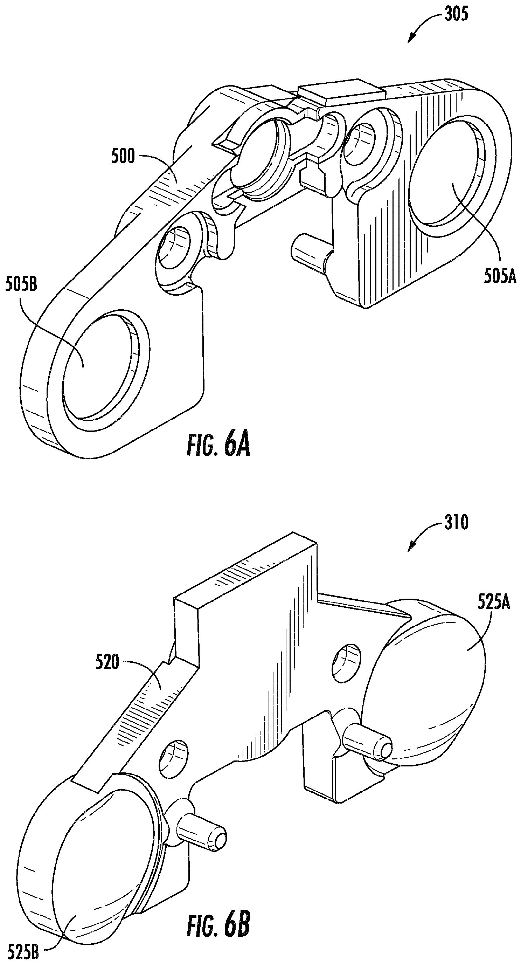

Referring now to FIGS. 5A, 5B, 6A, and 6B, example rear and front lens assemblies are illustrated. In some embodiments, as seen in FIGS. 5A and 6A, the rear lens assembly 305 comprises a body 500, a rear aiming lens 510, a right rear illumination lens 505A, and a left rear illumination lens 505B. In some embodiments, the rear lens assembly 305 has a unitary construction. For example, in some embodiments, rear lens assembly 305 is injection molded as a single, unitary piece, using any suitable material, such as any suitable plastic. In some embodiments, the rear aiming lens 510 is centrally located on the body 500 of the rear lens assembly 305. In some embodiments, the right rear illumination lens 505A and the left rear illumination lens 505B are symmetrically located on opposing sides of a center line of the body 500 of the rear lens assembly 305. In some embodiments, the rear aiming lens 510 is located higher on the body 500 of the rear lens assembly 305 than the right rear illumination lens 505A and the left rear illumination lens 505B.

In some embodiments, as seen in FIGS. 5B and 6B, the front lens assembly 310 comprises a body 520, a front aiming lens 530, a right front illumination lens 525A, and a left front illumination lens 525B. In some embodiments, the front lens assembly 310 has a unitary construction. For example, in some embodiments, front lens assembly 310 is injection molded as a single, unitary piece, using any suitable material, such as any suitable plastic. In some embodiments, the front aiming lens 530 is centrally located on the body 520 of the front lens assembly 310. In some embodiments, the right front illumination lens 525A and the left front illumination lens 525B are symmetrically located on opposing sides of a center line of the body 520 of the front lens assembly 310. In some embodiments, the front aiming lens 530 is located higher on the body 520 of the front lens assembly 310 than the right front illumination lens 525A and the left front illumination lens 525B.

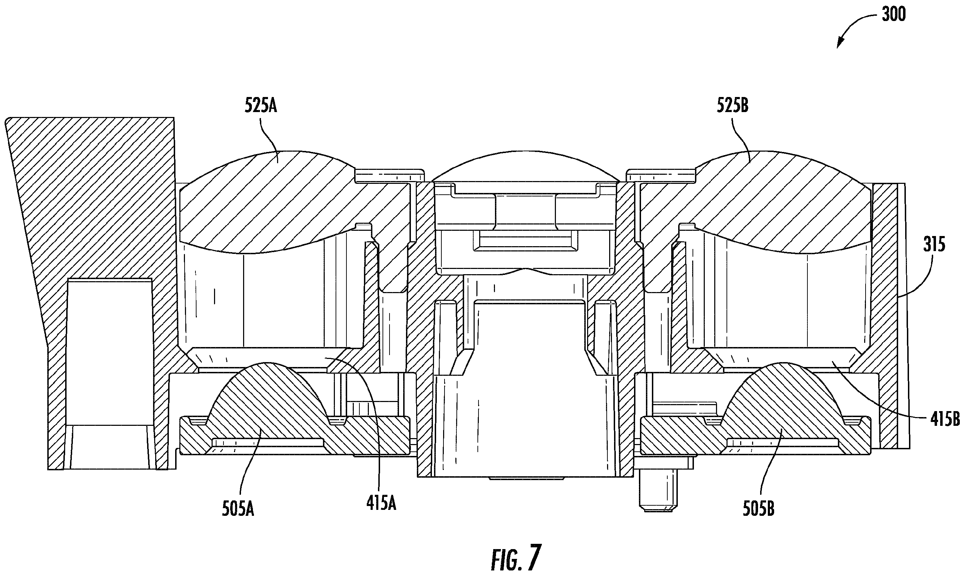

In some embodiments, the rear lens assembly 305 is affixed to the rear side of the housing 315 and the front lens assembly 310 is affixed to the front side of the housing 315 such that the rear aiming lens 510 is aligned with the front aiming lens 530, the right rear illumination lens 505A is aligned with the right front illumination lens 525A, and the left rear illumination lens 505B is aligned with the left front illumination lens 525B. This positioning is seen in FIG. 7.

In some embodiments, the optical assembly 300 is mounted to the PCB such that the aiming light source 340 (for example, an LED) would be aligned with the rear aiming lens 510. In some embodiments, light emitted by the aiming light source 340 is shaped and projected by the rear aiming lens 510 and the front aiming lens 530 to project an aiming dot in front of the example indicia data capturing device 105.

In some embodiments, the optical assembly 300 is mounted to the PCB such that the right light source 325A is aligned with the right rear illumination lens 505A and the left light source 325 is aligned with the left rear illumination lens 505B.

In some embodiments, the right pattern-shaping aperture 415A is positioned between and in line with the right rear illumination lens 505A and the right front illumination lens 525A. In some embodiments, the left pattern-shaping aperture 415B is positioned between and in line with the left rear illumination lens 505B and the left front illumination lens 525B. In some embodiments, the right pattern-shaping aperture 415A and the left pattern-shaping aperture 415B are generally shaped like the field of view of the camera 320.

In some embodiments, the right rear illumination lens 505A and the left rear illumination lens 505B are generally dome-shaped and generally symmetric, while the right front illumination lens 525A and the left front illumination lens 525B are generally at least partially wedge-shaped and generally asymmetric. In some embodiments, the specific shapes of the illumination lenses are selected to perform the desired functionality described below.

The right rear illumination lens 505A and the left rear illumination lens 505B may be termed "collection lenses," as these lenses collect light from their respective light sources. These collection lenses transmit the collected light with reduced divergence. That is, the collected light is collimated by the collection lenses. The right front illumination lens 525A and the left front illumination lens 525B may be termed "projection lenses," as these lenses project the light that is transmitted by the respective collection lenses and passes through the respective apertures. The projections lenses also shape the light as described herein. For clarity, the rear illumination lenses will be referred to as collection lenses and the front illumination lenses will be referred to as projection lenses for the remainder of the description.

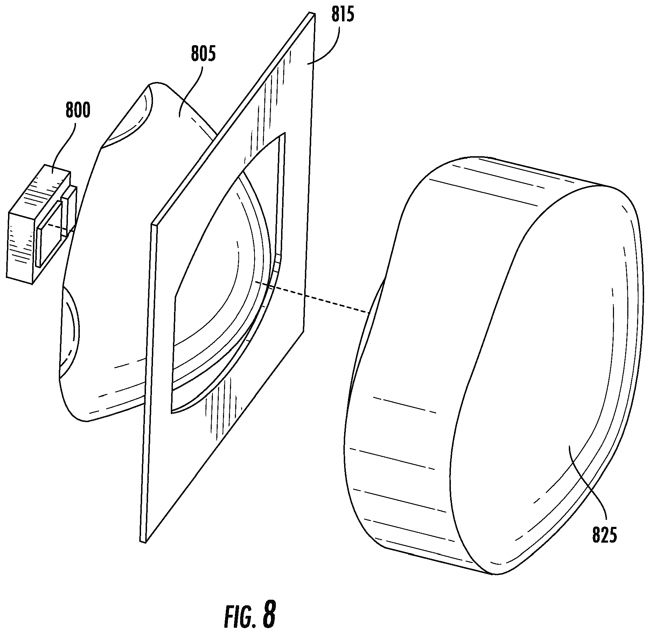

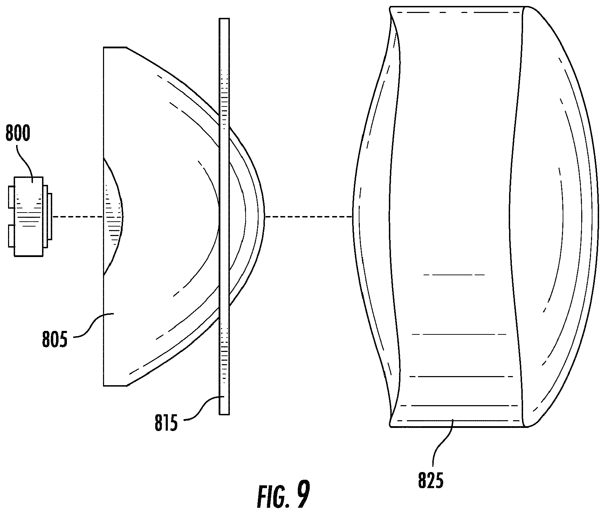

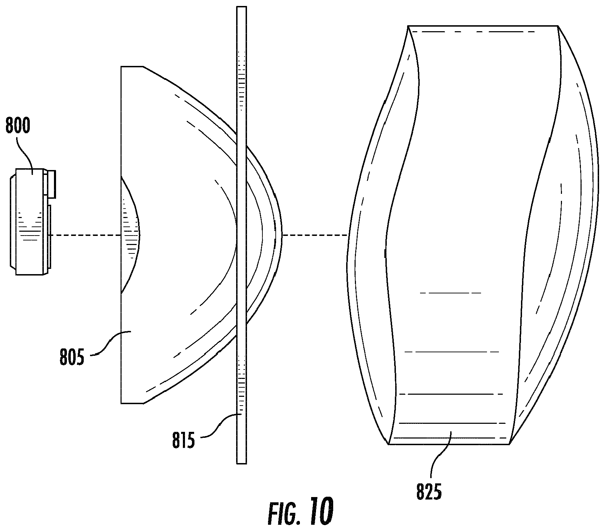

Referring now to FIGS. 8-10, one side of an example dual illumination lens arrangement is illustrated separated from the example indicia data capturing device to enable the relative positions of the components to be more readily viewed. FIGS. 8-10 illustrate a left light source 800, a left rear collection lens 805, a left pattern-shaping aperture 815, and a left front projection lens 825. While FIGS. 8-10 illustrate the left side components of an example dual illumination lens arrangement, the right side components and their arrangement would be a mirror image of what is shown in FIGS. 8-10 and would function similarly. FIG. 8 is a perspective view from the front, top, and medial side. FIG. 9 is a lateral side view. FIG. 10 is a top view.

As seen in FIGS. 8-10, the left light source 800, the left rear collection lens 805, the left pattern-shaping aperture 815, and the left front projection lens 825 are all aligned. The left light source 800 and the left rear collection lens 805 are positioned such that most or all of the light emitted by the left light source 800 is collected by the left rear collection lens 805. The left rear collection lens 805 and the left pattern-shaping aperture 815 are positioned such that the front "nose" of the collection lens 805 protrudes through the aperture 815.

The dome shape of the collection lens 805 is visible in FIGS. 6-10. The wedge shape of the projection lens 825 is visible in FIG. 10, in which the lateral side is narrower than the medial side.

As described above, embodiments of the present disclosure use a symmetric arrangement of two projection-style illumination arrangements. Each side projects a light pattern that tapers off from the lateral edge to the medial edge. The two projected patterns combine to create a substantially uniform pattern that is positioned just inside the perimeter of the FOV of the imaging component to provide illumination for an example indicia data capturing device.

The two projected patterns are created by shaping and tuning the light emitted from the right and left light sources. The light emitted from each light source is shaped and tuned by the corresponding collection lens, pattern-shaping aperture, and projection lens.

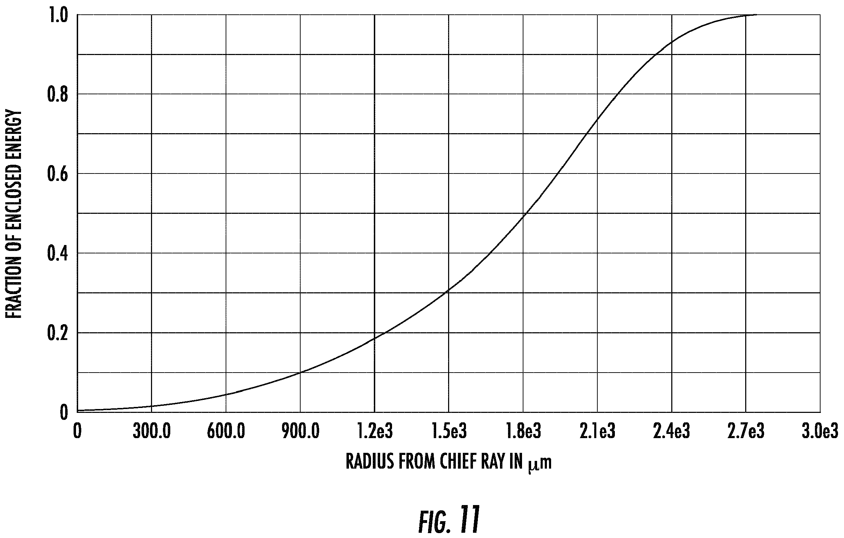

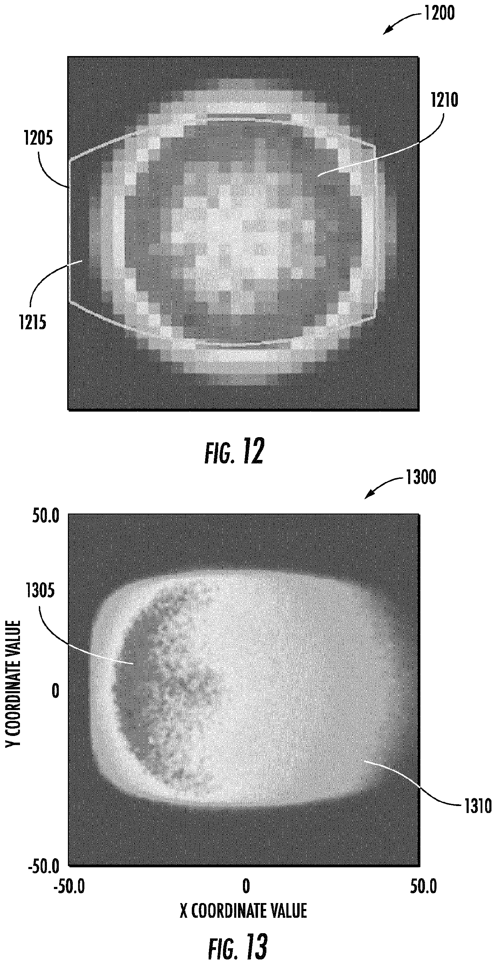

FIGS. 11 and 12 provide additional information about the functionality of an example collection lens. In some embodiments, an example collection lens tunes the distribution of light transmitted toward the aperture to have greater energy near three sides (the top, the bottom, and the lateral side) of the perimeter of the aperture. In some embodiments, this is done by targeting a specific encircled energy profile for each collection lens, resulting in greater energy closer to the perimeter of the aperture, and by the relative positions of each collection lens and each respective aperture such that the medial side of the perimeter of the aperture is underfilled with light. FIG. 11 illustrates an example encircled light energy profile of a first lens (i.e., a collection lens) of an example dual illumination lens arrangement that provides the desired higher energy near the perimeter. FIG. 12 illustrates an example light distribution 1200 in which higher intensity light 1210 transmitted by an example collection lens is distributed at the top, bottom, and lateral side (i.e., the right side in FIG. 12) of the aperture 1205, while little to no light is distributed at the medial side 1215 (i.e., the left side in FIG. 12) of the aperture 1205.

FIGS. 13, 14A-D, and 15 provide additional information about the functionality of example projection lenses. In some embodiments, the aperture forms the shape to be projected out into the FOV. In some embodiments, each example projection lens projects an image of the respective aperture out into the FOV, tapering the intensity of the illumination from highest near the projected side edge (i.e., the lateral edge) to lowest on the un-projected side edge (i.e., the medial edge), with a nearly linear fall-off in between.

FIG. 13 illustrates an example light distribution 1300 of light projected by an example projection lens, in which the projected light tapers from a higher intensity light 1305 on the lateral side (i.e., the left side in FIG. 13) to a lower intensity light 1310 (or no light) at the medial side (i.e., the right side in FIG. 13).

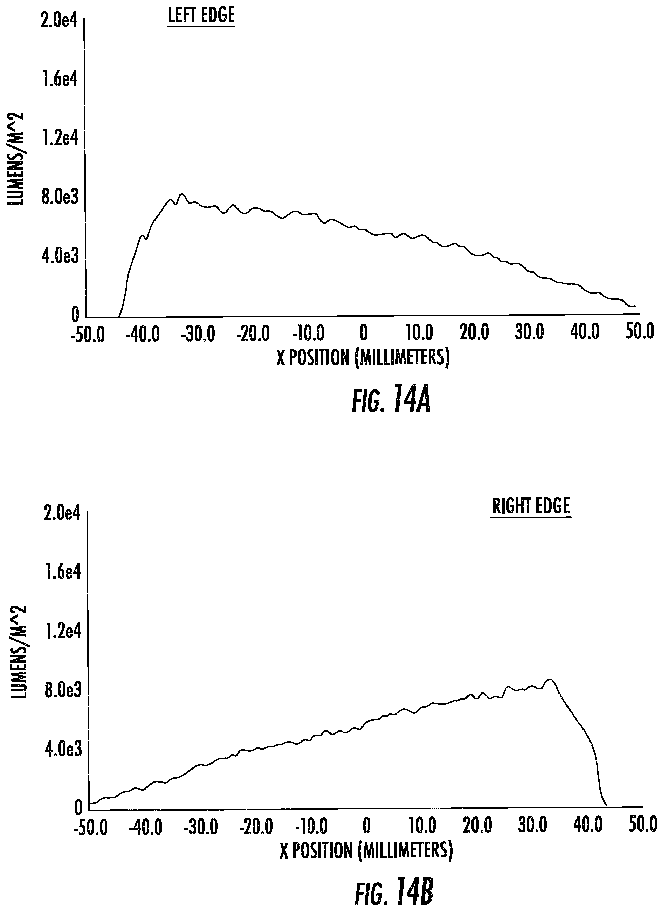

FIGS. 14A-D provide a graphical representation of the near linear fall-off of projected light from each example projection lens and the effect of combining the left and right projected light patterns. FIG. 14A provides a graphical representation of the intensity of light projected by the left side of an example dual-lens illumination arrangement, with the graphed line representing the light intensity (in lumens per square meter) over the horizontal aspect of the FOV. As seen in FIG. 14A, a fairly sharp left edge is provided and the light tapers nearly linearly to the right.

FIG. 14B provides a graphical representation of the intensity of light projected by the right side of an example dual-lens illumination arrangement, with the graphed line representing the light intensity (in lumens per square meter) over the horizontal aspect of the FOV. As seen in FIG. 14B, a fairly sharp right edge is provided and the light tapers nearly linearly to the left.

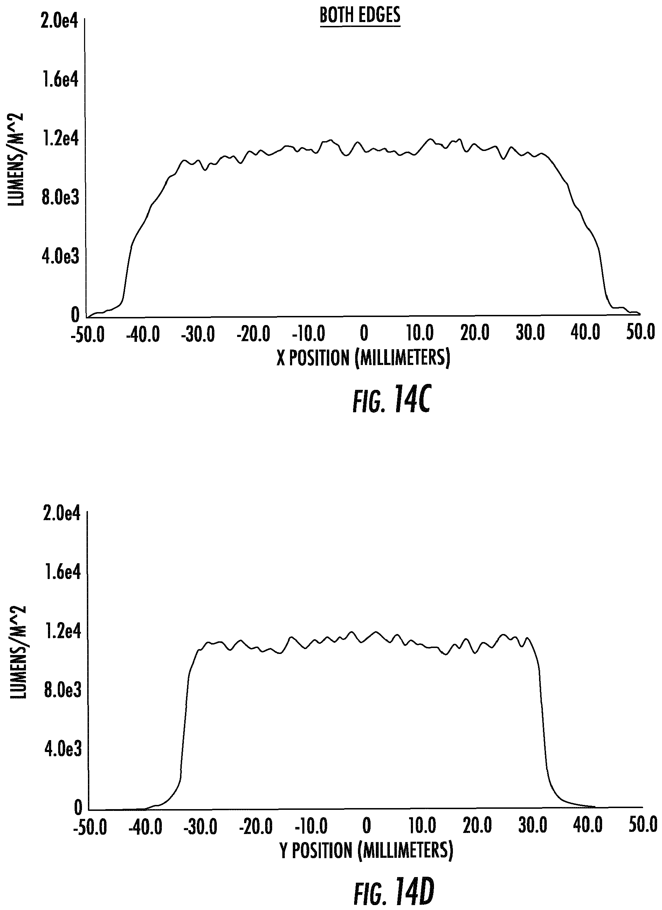

FIGS. 14C and 14D provides a graphical representation of the intensity of combined light projected by the left and right sides of an example dual-lens illumination arrangement, with the graphed line representing the light intensity (in lumens per square meter) over the horizontal aspect of the FOV (in FIG. 14C) and over the vertical aspect of the FOV (in FIG. 14D). As seen in FIGS. 14C and 14D, the tapered light from FIGS. 14A and 14B has combined to provide an illumination light pattern with fairly sharp edges on all four sides and substantially uniform distribution.

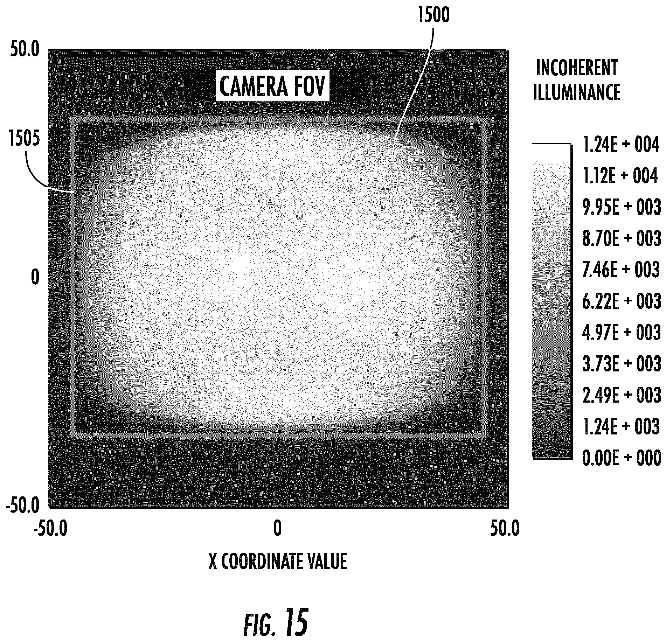

FIG. 15 illustrates an example illumination pattern 1500 of an example dual illumination lens arrangement. The light pattern 1500 results from the combination of light projected from the left and right sides of an example dual-lens illumination arrangement. As seen in FIG. 15, the example illumination pattern 1500 has fairly sharp edges and a substantially uniform distribution. Additionally, the example illumination pattern 1500 nearly fills the FOV 1505 but does not extend beyond the FOV 1505.

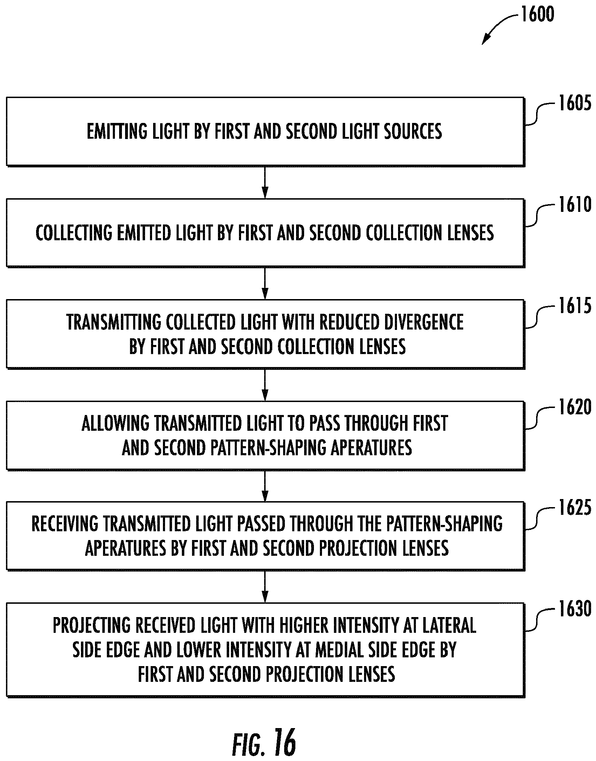

Reference will now be made to FIG. 16, which provides a flowchart illustrating example steps, processes, procedures, and/or operations in accordance with various embodiments of the present disclosure. Various methods described herein, including, for example, example methods as shown in FIG. 16 may provide various technical benefits and improvements.

Referring now to FIG. 16, an example method 1600 is illustrated. In some embodiments, the example method uses a dual lens illumination arrangement to project two different, but symmetric, illumination light patterns which combine to produce a uniform illumination light pattern within the FOV of an example indicia data capturing device.

At step/operation 1605, right and left light sources (such as, but not limited to, the right light source 325A and the left light source 325B of the indicia data capturing device 105 described above in connection with FIGS. 1, 3A, and 3B) emit light.

At step/operation 1610, right and left collection lenses (such as, but not limited to, the right collection lens 505A and the left collection lens 505B of the indicia data capturing device 105 described above in connection with FIGS. 1, 3A, 3B, 5A, and 6A) collect the light emitted by, respectively, the right and left light sources.

At step/operation 1615, right and left collection lenses (such as, but not limited to, the right collection lens 505A and the left collection lens 505B of the indicia data capturing device 105 described above in connection with FIGS. 1, 3A, 3B, 5A, and 6A) transmit the collected light with reduced divergence. As described above, the right and left collection lenses transmit the collected light toward, respectively, right and left pattern-shaping apertures such that the light transmitted by the right and left collection lenses is concentrated along three of the edges of each respective pattern-shaping aperture.

At step/operation 1620, right and left pattern-shaping apertures (such as, but not limited to, the right pattern-shaping aperture 415A and the left pattern-shaping aperture 415B of the indicia data capturing device 105 described above in connection with FIGS. 1 and 4) allow the light transmitted by the right and left collection lenses to pass through. As described above, the right and left pattern-shaping apertures are shaped like the FOV of the example indicia data capturing device and therefore shape the light passing through them accordingly.

At step/operation 1625, right and left projection lenses (such as, but not limited to, the right projection lens 525A and the left projection lens 525B of the indicia data capturing device 105 described above in connection with FIGS. 1, 3A, 3B, 5B, and 6B) receive the light transmitted by the right and left collection lenses that passes through the right and left pattern-shaping apertures.

At step/operation 1630, right and left projection lenses (such as, but not limited to, the right projection lens 525A and the left projection lens 525B of the indicia data capturing device 105 described above in connection with FIGS. 1, 3A, 3B, 5B, and 6B) project the light received at step/operation 1625 with a higher intensity at the lateral side edge and a lower intensity at the medial side edge such that the light patterns projected by each projection lens combine to produce a uniform illumination light pattern within the FOV of an example indicia data capturing device.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. An optical assembly comprising:
an imaging system comprising an imaging lens and a corresponding imaging sensor, the imaging system having a field of view;
a first light source;
a first collection lens positioned and shaped to collect light emitted by the first light source and transmit the collected light with reduced divergence;
a first pattern-shaping aperture positioned to allow at least a portion of the light transmitted by the first collection lens to pass therethrough;
a first projection lens positioned to receive the light transmitted by the first collection lens and passed through the first pattern-shaping aperture, the first projection lens shaped to project the received light into the field of view of the imaging system with a higher intensity at a lateral side edge of the light projected by the first projection lens and a lower intensity at a medial side edge of the light projected by the first projection lens;
a second light source;
a second collection lens positioned and shaped to collect light emitted by the second light source and transmit the collected light with reduced divergence;
a second pattern-shaping aperture positioned to allow light transmitted by the second collection lens to pass therethrough; and
a second projection lens positioned to receive the light transmitted by the second collection lens and passed through the second pattern-shaping aperture, the second projection lens shaped to project the received light into the field of view of the imaging system with a higher intensity at a lateral side edge of the light projected by the second projection lens and a lower intensity at a medial side edge of the light projected by the second projection lens;
wherein the first light source and the second light source are positioned substantially symmetrically on opposite sides of the imaging lens;
wherein the first collection lens and the second collection lens are positioned substantially symmetrically on opposite sides of the imaging lens;
wherein the first pattern-shaping aperture and the second pattern-shaping aperture are positioned substantially symmetrically on opposite sides of the imaging lens;
wherein the first projection lens and the second projection lens are positioned substantially symmetrically on opposite sides of the imaging lens; and
wherein the light projected by the first projection lens and the light projected by the second projection lens are projected to a same location such that the light projected by the first projection lens and the light projected by the second projection lens merges.

2. The optical assembly of claim 1, wherein the first pattern-shaping aperture defines a shape of the light projected by the first projection lens and the second pattern-shaping aperture defines a shape of the light projected by the second projection lens.

3. The optical assembly of claim 1, wherein the light projected by the first projection lens and the light projected by the second projection lens are entirely within the field of view of the imaging system.

4. The optical assembly of claim 1, wherein the first collection lens is positioned and shaped to transmit substantially no light along a medial side edge of the first pattern-shaping aperture; and
wherein the second collection lens is positioned and shaped to transmit substantially no light along a medial side edge of the second pattern-shaping aperture.

5. The optical assembly of claim 1, wherein the first collection lens and the second collection lens are each substantially radially symmetric.

6. The optical assembly of claim 1, wherein the first projection lens and the second projection lens are substantially asymmetric.

7. The optical assembly of claim 1, wherein the first projection lens and the second projection lens are at least partially wedge-shaped.

8. An imaging reader for electro-optically reading a symbol by image capture, comprising:
a housing; and
an optical assembly mounted in the housing, the optical assembly comprising:
an imaging system comprising an imaging lens and a corresponding imaging sensor, the imaging system having a field of view;
a first light source;
a first collection lens positioned and shaped to collect light emitted by the first light source and transmit the collected light with reduced divergence;
a first pattern-shaping aperture positioned to allow at least a portion of the light transmitted by the first collection lens to pass therethrough;
a first projection lens positioned to receive the light transmitted by the first collection lens and passed through the first pattern-shaping aperture, the first projection lens shaped to project the received light into the field of view of the imaging system with a higher intensity at a lateral side edge of the light projected by the first projection lens and a lower intensity at a medial side edge of the light projected by the first projection lens;
a second light source;
a second collection lens positioned and shaped to collect light emitted by the second light source and transmit the collected light with reduced divergence;
a second pattern-shaping aperture positioned to allow light transmitted by the second collection lens to pass therethrough; and
a second projection lens positioned to receive the light transmitted by the second collection lens and passed through the second pattern-shaping aperture, the second projection lens shaped to project the received light into the field of view of the imaging system with a higher intensity at a lateral side edge of the light projected by the second projection lens and a lower intensity at a medial side edge of the light projected by the second projection lens;
wherein the first light source and the second light source are positioned substantially symmetrically on opposite sides of the imaging lens;
wherein the first collection lens and the second collection lens are positioned substantially symmetrically on opposite sides of the imaging lens;
wherein the first pattern-shaping aperture and the second pattern-shaping aperture are positioned substantially symmetrically on opposite sides of the imaging lens;
wherein the first projection lens and the second projection lens are positioned substantially symmetrically on opposite sides of the imaging lens; and
wherein the light projected by the first projection lens and the light projected by the second projection lens are projected to a same location such that the light projected by the first projection lens and the light projected by the second projection lens merges.

9. The imaging reader of claim 8, wherein the first pattern-shaping aperture defines a shape of the light projected by the first projection lens and the second pattern-shaping aperture defines a shape of the light projected by the second projection lens.

10. The imaging reader of claim 8, wherein the light projected by the first projection lens and the light projected by the second projection lens are entirely within the field of view of the imaging system.

11. The imaging reader of claim 8, wherein the first collection lens is positioned and shaped to transmit substantially no light along a medial side edge of the first pattern-shaping aperture; and
wherein the second collection lens is positioned and shaped to transmit substantially no light along a medial side edge of the second pattern-shaping aperture.

12. The imaging reader of claim 8, wherein the first collection lens and the second collection lens are each substantially radially symmetric.

13. The imaging reader of claim 8, wherein the first projection lens and the second projection lens are substantially asymmetric.

14. The imaging reader of claim 8, wherein the first projection lens and the second projection lens are at least partially wedge-shaped.

15. A method of projecting a substantially uniform illumination pattern of light on a symbol to be read by an imaging reader, the method comprising:
emitting light by a first light source;
collecting, by a first collection lens, light emitted by the first light source;
transmitting, by the first collection lens, the collected light with reduced divergence;
allowing, by a first pattern-shaping aperture, at least a portion of the light transmitted by the first collection lens to pass therethrough;
receiving, by a first projection lens, the light transmitted by the first collection lens and passed through the first pattern-shaping aperture;
projecting, by the first projection lens, the received light into a field of view of an imaging system with a higher intensity at a lateral side edge of the light projected by the first projection lens and a lower intensity at a medial side edge of the light projected by the first projection lens;
emitting light by a second light source;
collecting, by a second collection lens, light emitted by the second light source;
transmitting, by the second collection lens, the collected light with reduced divergence;
allowing, by a second pattern-shaping aperture, at least a portion of the light transmitted by the second collection lens to pass therethrough;
receiving, by a second projection lens, the light transmitted by the second collection lens and passed through the second pattern-shaping aperture; and
projecting, by the second projection lens, the received light into a field of view of an imaging system with a higher intensity at a lateral side edge of the light projected by the second projection lens and a lower intensity at a medial side edge of the light projected by the second projection lens;
wherein the first light source and the second light source are positioned substantially symmetrically on opposite sides of an imaging lens of an imaging system;
wherein the first collection lens and the second collection lens are positioned substantially symmetrically on opposite sides of the imaging lens;
wherein the first pattern-shaping aperture and the second pattern-shaping aperture are positioned substantially symmetrically on opposite sides of the imaging lens;
wherein the first projection lens and the second projection lens are positioned substantially symmetrically on opposite sides of the imaging lens; and
wherein the light projected by the first projection lens and the light projected by the second projection lens are projected to a same location such that the light projected by the first projection lens and the light projected by the second projection lens merges.
